# EUROPEAN PATENT APPLICATION

(11) **EP 4 343 332 A1**
(43) Date of publication of application: **27.03.2024**
(21) Application number: 22197861.2
(22) Date of filing: 26.09.2022
(51) Int. Cl.: G01N 35/00, G01N 25/20, G01N 25/48

(54) **SAMPLE CHANGER, CRUCIBLE AND TRAY FOR A THERMOANALYTICAL INSTRUMENT**

(71) Applicant: Mettler-Toledo GmbH, 8606 Greifensee (CH)
(72) Inventor: Joerimann, Urs, 8614 Bertschikon (CH); Wagner, Matthias, 5234 Villigen (CH); Meyer, Thomas, 8057 Zürich (CH)
(74) Representative: Mettler-Toledo

(57) **Abstract**

A sample changer (5) for a thermoanalytical instrument is provided with a camera (12) and image processing capabilities for improved positional control when depositing a sample object (16) on or picking up a sample object (16) from a sample support (3).

## Description

The invention relates to a sample changer for a thermoanalytical instrument comprising a moveable member driven for movement between at least a receiving position to pick up a sample object at a releasing sample support and a releasing position to deposit said sample object at a receiving sample support. In particular, the invention relates to a thermoanalytical instrument incorporating such sample changer and to a crucible and tray for use therewith.

Conventional sample changers for thermoanalytical instruments may comprise a robot arm having a free end thereof provided with grippers adapted to pick up a sample object, for example an empty crucible or a crucible accommodating a specimen of a substance to be analysed, in order to move said sample object between various positions for example within a working space of a thermoanalytical instrument. Typically, the robot arm moves to a receiving position to pick up the sample object at a releasing sample support that may be one among a plurality of sample holding positions formed in a tray. The robot arm then moves to a releasing position to deposit the gripped sample object at a receiving sample support that may be a thermoanalytical sensor of a thermoanalytical instrument to thereby enable a thermoanalytical analysis of the sample object to be performed. During the measurement, the robot arm is being withdrawn from the releasing position so as not to interfere with the measurement process. After completion of the measurement, the robot arm is again moved to its previous releasing position to pick up the measured sample object so that the previous releasing position now becomes a current pick-up position. From there, the robot arm with the gripped sample object may be moved to a current releasing position that may for example be the previous receiving position to deposit the measured sample object at a current receiving sample support that may be an empty sample holding position of the tray.

While the above operation of the robot arm is sufficient to automatically transport sample objects between a storage location and a measurement location, positional control and identification of the sample objects during handling by the robot arm, however, are still susceptible of improvement.

It is thus an object of the present invention to provide a sample changer of the above referenced type that enables improved control over the handling of the sample objects. A further object is the provision of a thermoanalytical instrument incorporating such sample changer, and a tray and a crucible for use therewith.

As a solution of this object, a sample changer for a thermoanalytical instrument is characterized by a camera mounted to said moveable member for movement therewith, said camera having a field of view and a depth of focus adapted to capture an at least partial image of at least one of said sample object, said releasing or receiving sample support.

The camera of the sample changer according to the invention is most preferably a digital camera having an image sensor that converts an image captured by the camera into a two-dimensional pixel representation that is suitable for further processing and/or evaluation. Since the camera follows the movement of the moveable member, it may capture an image or at least a partial image of a releasing or receiving sample support, that may be empty or may have a sample object deposited thereon, when said moveable member is moved towards said receiving or releasing positions, respectively. The captured images thereby allow to determine a positional relationship between said sample object and one of said releasing or receiving sample supports. The captured images further allow to check whether the corresponding support is empty or has a sample object deposited thereon, and they also allow to image the sample object, that may be an empty crucible or a crucible accommodating a specimen of a substance to be thermoanalytically analysed, for example before or after a measurement, in particular for the purposes of documentation. Further, images may be captured that allow to identify the sample objects, for example by evaluating a colour, a geometrical dimension or a mark provided on the crucible.

The motion of the moveable member is for example driven along three mutually orthogonal translatory axes with an X- and an Y-axis extending horizontally and a Z-axis extending vertically. It is further preferred that the camera's optical axis, which is the optical axis of the camera, extends in parallel to the vertical Z-axis of movement of the moveable member.

The moveable member may comprise gripping means arranged at a free end portion and centered around a vertical longitudinal axis thereof, said gripping means being adapted to grip said sample object in frictional or positive locking engagement when being lowered down towards said sample object along its vertical direction of movement. The camera may be mounted to the moveable member with the camera's optical axis horizontally offset from said vertical longitudinal axis of said moveable member. It may thus be necessary to move the moveable member to a position that is accordingly offset from its receiving or releasing positions when an image or at least partial image of said sample object and its sample support is to be captured.

A preferred embodiment of the sample changer according to the invention comprises a light source mounted to said moveable member for movement therewith to illuminate said field of view of said camera. The illumination by the light source has the benefit to reduce the influence of changing light intensities in an external laboratory environment.

The light source is preferably a ring light surrounding the camera to thereby avoid asymmetries in illumination.

It is also preferred that the light source emits polarized light and said camera includes a polarization filter. Thereby, detrimental effects caused by reflections, specifically from the surface of the sample object, are reduced.

According to another beneficial aspect, the light source emits white light in the visible spectrum and said camera is a colour camera, sensitive in at least a first and a second spectral channel, preferably a red, green and blue channel, in the visible spectrum. Thereby, different colours can be detected and used for sample object observations.

The sample changer according to the invention specifically comprises image processing means for analysing at least one of the images captured by said camera. The image processing means may in particular allow for image segmentation to thereby extract at least one characterizing feature of said sample object and/or one of said sample supports.

In particular, said image processing means operates to analyse said at least one image for a positional relationship between said sample object and at least one of said releasing or receiving sample supports.

As a further improvement, a signal indicative of said positional relationship is used for controlling said movement of said moveable member. Thereby, a feedback control may be established to correctly position the moveable member in one of said receiving or releasing positions for picking up or depositing a sample object in a correct positional relationship to the respective support. The feedback control is preferably realized by a controller which receives a signal indicative of said positional relationship and issues commands controlling the movable member.

In particular, said image processing means operates to analyse said at least one image for at least one visually distinguishable feature of said sample object.

Alternatively or additionally, said image processing means operates to analyse said at least one image for at least one dimensional feature of said sample object. An example for a visually distinguishable feature of said sample object is its colour or a mark provided thereon. As example for a dimensional feature is a part of the shape of the sample object such as, in case of a crucible as a sample object, the vertical height of the crucible, may be detected.

According to a further aspect of the sample changer according to the invention, a position of said moveable member in which both of at least a portion of said sample object and at least a portion of one of said releasing or receiving sample supports are in focus within the field of view of said camera is offset from said receiving or releasing positions, respectively. In said offset position of said moveable member, the field of view of the camera may thus be centered onto one of said releasing or receiving sample supports, while in said receiving or releasing positions the moveable member may be optimally located for gripping or releasing said sample objects.

In another preferred embodiment of the sample changer according to the invention, said movement of said moveable member comprises two horizontally displaced but vertically identical positions, a vertical dimension of said sample object being calculated from images captured at said two positions. The calculation of the vertical dimensions from the two images is straight forward from the laws of geometrical optics.

According to another aspect of the invention, the sample changer further comprises a line or crosshair laser, preferably mounted for movement with said moveable member, having an laser's optical axis, which is the optical axis of the line or crosshair laser, oriented so as to cause an observable shadow of said sample object on one of said releasing or receiving sample supports. The shadow caused by the sample object on the support appears as a gap in the laser line on the captured image, and the length of the gap could be used for calculating the height of the sample object, specifically a crucible, from the laws of geometrical optics. Even more important, the appearance of the gap on the image is indicative of the presence of a sample object on the sample support and allows to safely detect the presence of a sample object, even in cases where there exists only a poor contrast between colours of a sample object and its support.

In an alternative embodiment said camera comprises a focusing objective lens having a focal length thereof controlled in accordance with a distance to each of said releasing or receiving sample supports, respectively. With this self-focusing capability of the alternative embodiment, it is no longer necessary to vertically move the camera in order to appropriately adjust its depth of focus.

The invention also encompasses a thermoanalytical instrument comprising a thermoanalytical sensor for receiving a sample object in thermal contact therewith, a tray having at least one storage location for holding the sample object, and a sample changer, wherein said releasing sample support is anyone of said storage locations of said tray and said receiving sample support is said thermoanalytical sensor.

Thermoanalytical instruments generally function to supply a thermal excitation to a sample object to be analysed and to measure the sample object's thermal response. Typical examples of thermoanalytical instruments are differential scanning calorimeters and thermogravimetric instruments. In these instruments, the sample changer according to the invention functions to pick up a sample object from the tray, convey the sample object to the instrument's thermoanalytical sensor and deposits the sample object on said thermoanalytical sensor that may be exposed to the sample changer through a charging/discharging opening in the measuring chamber of the instrument. The sample changer is then withdrawn from the sample object and the opening is closed for the measuring process. After completion of the measurement, the measured sample object is again exposed to the sample changer to be again gripped and conveyed to a suitable receiving sample support. The thermoanalytical instrument according to the invention thereby allows for a fully automated operation of the instrument.

In a preferred embodiment, said thermoanalytical sensor comprises a positioning pattern, preferably including an arcuate section centered around a target position on said sensor adapted for imaging by said camera so as to image the positional relation between said sample object and said sensor on an image captured by said camera. Specifically, the positioning pattern may comprise two arcuate sections symmetrically arranged around the target position on said sensor and dimensioned to closely encircle a circular bottom portion of a sample object, preferably a crucible. A positioning pattern can also comprise a single cross or a set of three or four crosses, square backets or similar marks. Preferably, the positioning pattern is such that it remains at least partially visible when the sample object is arranged on the target position as this allows a visual confirmation of the accurate positioning of the sample object.

Most preferably, said thermoanalytical sensor comprises a colour-calibration area, preferably arranged at an outer peripheral portion of said sensor, for performing a white balance operation for an image captured by said camera being a colour camera. The target position on sensor is preferably part of a support area. The support area is subareas of the sample support formed by the thermoanalytical sensor. There is one support area for every target position and if there is more than one support area on a single sensor, they do not overlap. If present, the positioning pattern is preferably found in support area associated with the respective target position indicated by the positioning pattern. The support area has a size greater than the sample object which it should support, such that parts of the support area are visible when the sample object occupies the target position. Preferably, said support area has a colour which predominated in one of the spectral channels of said camera. Preferably, all support areas of a sensor have the same colour. Performing the white balance operation causes colour correctness of the images to be enhanced. Preferably, the colour-calibration area is white or grey, with a colour-neutral or a known reflection spectrum. The colour-calibration area can further comprise or be formed by a colour chart with a known reflection spectrum.

Preferably, the thermoanalytical instrument further comprises a cover configured to shield said sample changer from the ambient atmosphere all the way along its path of movement. Disturbances of the measurement caused by the environment are thereby minimised.

Another preferred embodiment of the thermoanalytical instrument further comprises evaluation means for evaluating the identity of a sample object based on at least one feature of said sample object on an image thereof captured by said camera. Specifically, said evaluation means may be sensitive to a feature like a colour, a shape, a symbol or an alphanumeric indication that is associated with the sample object so as to appear on a captured image of said sample object.

In a tray for use with a sample changer or a thermoanalytical instrument according to the invention, said tray and said sample object have either colours predominantly in spectral ranges of different channels of said camera or colours which are distributed in such a way over the spectral ranges of at least two channels of said camera that they can be clearly distinguished by the ratio of two of these channels. Preferably the tray is blue while the sample object is preferably golden, metallic grey and/or white. The metallic grey is preferably an aluminium-, platinum- or stainless steel-like colour. By recognising the colours on the pictures taken by the camera, the sample object, the tray and their mutual positional relation may be determined. A blue tray will dominate the blue channel, while a golden sample object might dominate the red channel. Grey and white colours occupy typically all channels about equally. In a ratio of the blue and the red channel, the tray is characterized by a high value, grey, platinum and white sample objects will be characterized by a value close to 1 while gold has a low value.

In a preferred embodiment, all sample supports of a thermoanalytical instrument according to the invention, have a common support-colour. The support-colour and the colour of the sample object predominate in spectral ranges of different channels of said camera or they are distributed in such a way over the spectral ranges of at least two channels of said camera that the support-colour and the colour of the sample object can be clearly distinguished by the ratio of two of these channels.

In a preferred embodiment, all support areas of the thermoanalytical sensor and the tray have the same colour.

In a preferred embodiment, the tray comprises at least one tray marker, preferably comprising a barcode and/or an abstract, numeric or alpha-numeric symbol, for imaging by said camera so as to enable an identification of at least one section of said tray associated with said tray marker on an image captured by said camera.

A crucible for use with a sample changer or a thermoanalytical instrument according to the invention comprises at least one crucible marker, preferably comprising an abstract, numeric or alpha-numeric symbol, a pattern or an ornament, for imaging by said camera so as to enable an identification of said crucible on an image captured by said camera. Preferably, the crucible marker is arranged on an upper annular rim of the crucible that faces the camera when an image is being captured so as to enhance the visibility of the crucible marker on said image.

In the following, exemplary embodiments will be described with reference to the drawings in which:
- Fig. 1: is a schematic view of a sample changer arranged within a closed working space of a thermoanalytical instrument;
- Fig. 2: is a schematic view of the sample changer of Fig. 1 moved to a position that faces a sample support of the thermoanalytical instrument;
- Fig. 3(a) and 3(b): are an images of sample supports captured by the camera of a sample changer according to Figs. 1 or 2;
- Figs. 4(a) and 4(b): schematically illustrate optical relations for imaging with the camera in a central or a laterally offset position, respectively;
- Fig. 5: schematically illustrates an embodiment additionally equipped with a line or a crosshair laser; and
- Fig. 6: schematically illustrates an optical effect caused by the laser of the embodiment of Fig. 5.

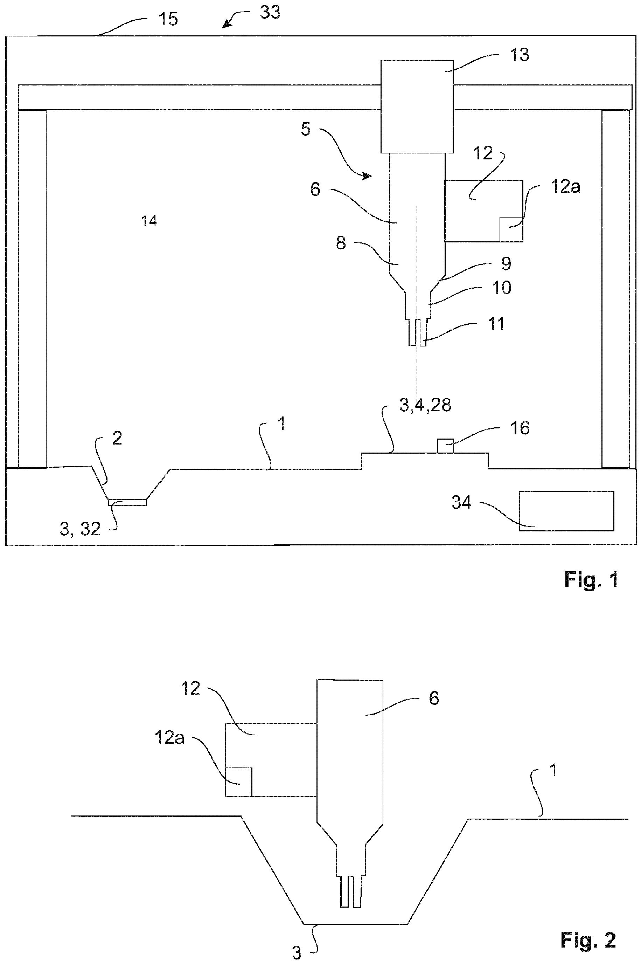

Fig. 1 illustrates a thermoanalytical instrument 33. As is illustrated in Fig. 1, an essentially horizontally extending work area 1 has a funnel-shaped access channel 2 formed therein that provides access to a receiving sample support 3 of a thermoanalytical instrument 33 that is for instance a differential scanning calorimeter or a thermogravimetric instrument. The receiving sample support 3 is a thermoanalytical sensor 32. A person of ordinary skill familiar with such thermoanalytical instruments will well understand the schematic nature of the illustration of Fig. 1, while practical embodiments of such instruments may often include a removeable lid and/or a slidable suspension of the sensor 32 to thereby expose the sensor 32 only for the purposes of loading or unloading a sample object 16 to be analysed.

At some horizontal distance from the access channel 2 a tray 4 is arranged on the work area 1 and comprises storage locations 28 formed to hold a plurality of sample objects 16 that may specifically be crucibles for receiving specimens of materials to be analysed. The storage locations 28 form releasing sample supports 3. Such trays 4 may for instance be formed so as to have the sample objects 16 or crucibles arranged therein, for example in an array of lines and columns. A crucible is an example of a sample object 16.

A sample changer 5 comprises a moveable member 6 having a vertically extending longitudinal axis 7 and comprising for example a cylindrical upper portion 8, an adjacent intermediate portion 9, and an adjacent cylindrical lower portion 10 with all the three portions centered around the longitudinal axis 7 so that the diameter of the moveable member 6 increases along the intermediate portion 9 between a larger diameter of the upper portion 8 and a smaller diameter of the lower portion 10. Grippers 11 arranged on the downwardly facing free end of the lower portion 10 are constructed to grip and retain a sample object 16, specifically a crucible.

A camera 12, in this example a digital camera, is attached to the outer circumference of the upper portion 8 of the moveable member 6 so as to have a camera's optical axis 17 vertically arranged, i.e., in parallel to the longitudinal axis 7. A light source 12a to illuminate the camera's field of view is attached to the camera 12. Preferably, the light source 12a is in the form of a ring light surrounding the camera 12. The light source 12a preferably emits polarised light and the camera 12 includes a polarisation filter so as to attenuate undesired reflections into the camera 12. The light source 12a for example emits white light in the visible spectrum.

Fig. 1 further schematically shows a drive unit 13 that operates to move the moveable member 6 together with the camera 12 and the light source 12a to various positions above work area 1 in both the horizontal directions (X-, Y-axis) and the vertical direction (Z-axis). These positions specifically include those which are appropriate for the moveable member 6 to receive or release sample objects 16 at any one of the sample supports 3, which are the sensor 32 or the storage locations 28 of the tray 4, to capture images or at least partial images of any one of the sample supports 3, and/or a sample object 16, and/or to appropriately adjust the lens distance of the camera 12 in the vertical direction. The whole workspace 14 where the moveable member 6 moves around to attain its various positions is shielded from the environment by a cover 15 that rises from the outer circumference of the work area 1.

The thermoanalytical instrument 33 comprises further evaluation means 34: The evaluation means 34 identify a sample object 16 using one or more images captured by the camera 12.

Fig. 2 schematically illustrates the moveable member 6 when moved into a position in which it may deposit a sample object 16 (not illustrated) at a sample support 3 or pick up a sample object 16 therefrom. In this case, the moveable member 6 is vertically lowered down to sample support 3 and is laterally centered thereon. In this position, the camera 12 is laterally offset from the center of the sample support 3 and its field of view is aligned to mainly cover the access channel 2 of the sample support 3.

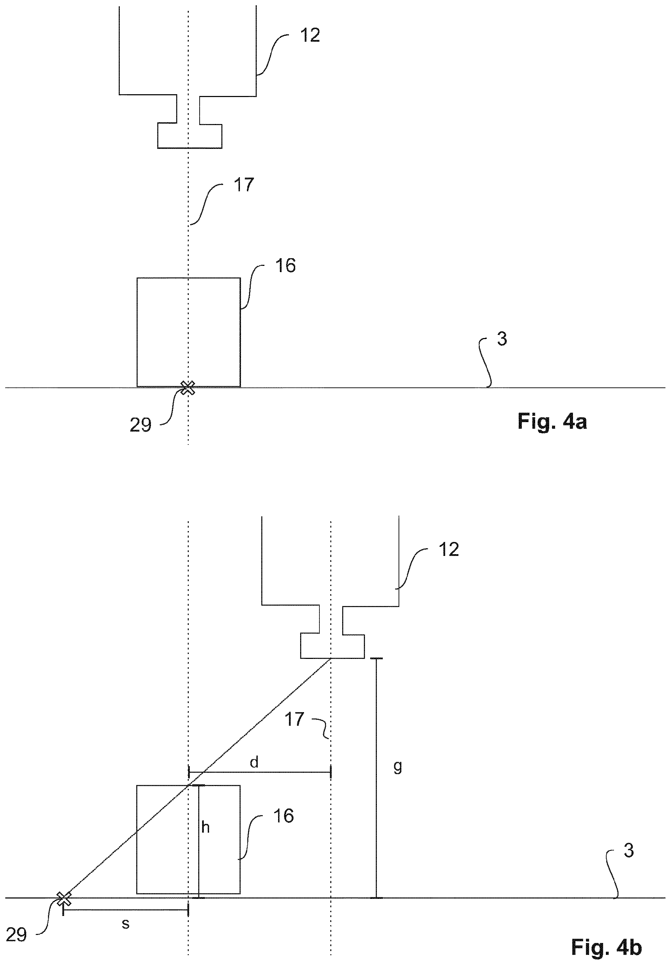

A more favourable alignment for image capture of sample support 3, in particular with a crucible thereon, is illustrated in Figures 4(a) and 4(b). In Fig. 4(a) the moveable member 6 has been laterally moved into a position in which the camera 12 has its camera's optical axis 17 centered onto the sample object 16 deposited onto the sample support 3 and the vertical distance between the sample support 3 and the objective lens 12c of the camera 12 have been adjusted by vertical movement of the moveable member 6 so as to locate the sample support 3 and the sample object 16 within the depth of focus of the objective lens 12c of the camera 12. In this position, the camera 12 captures a first image of the sample object 16and the sample support 3. A first apparent position 29 of the sample object 16 can be obtained, whereby the apparent position 29 is the position on the sample support 3 on which the centre of the sample object 16 appears to be. The camera 12 is then laterally shifted by a distance d as illustrated in Fig. 4(b) while maintaining the sample object 16 on the sample support 3 still within the field of view of the camera 12. On the image captured in the shifted position, a second apparent position 29 can be derived which is shifted with respect to the first apparent position by a lateral shift s, marked in Fig. 4(b). On the basis of the relations of geometrical optics illustrated in Fig. 4(b), the height h of the sample object 16 may then straight forwardly be calculated from the known values of d, s and the distance g between the sample support 3 and the camera 12.

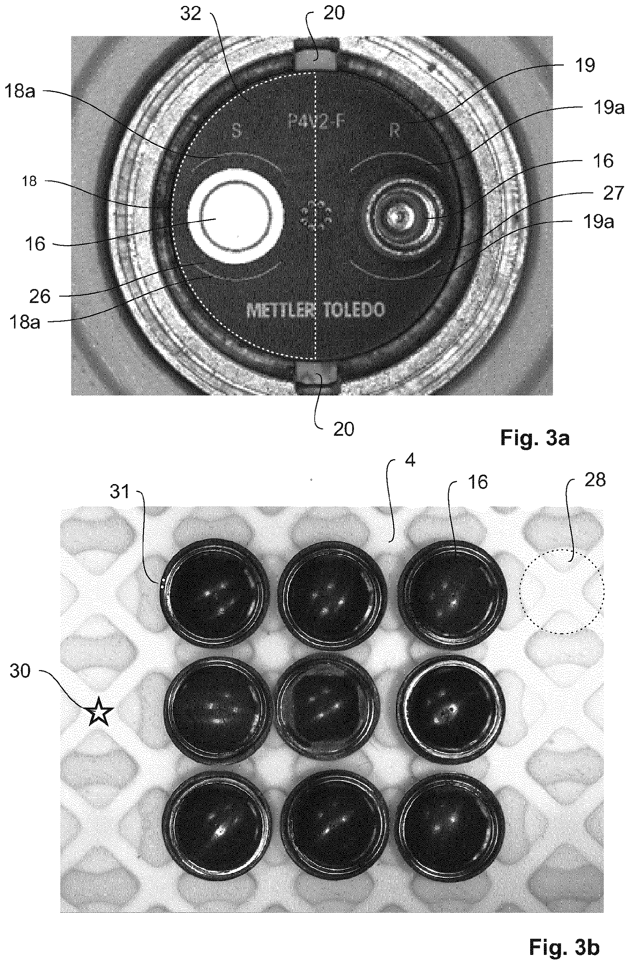

Figures 3(a) and 3(b) illustrate examples of images captured by the camera 12 for the cases that the sample support 3 is a sensor 32 of a differential scanning calorimeter (Fig. 3(a)) or is part of a tray 4 (Fig. 3(b)), respectively.

Specifically, as shown in Fig. 3(a), the sensor 32 of the differential scanning calorimeter includes a first target position 26 and a second target position 27 as is generally known in the art of differential scanning calorimetry (DSC). During a typical differential scanning calorimetry measurement, a crucible comprising a material of interest is placed on the first target position 26 while an empty crucible is placed on the second target position 27. Both crucibles are examples of sample objects 16. Beyond this conventional structure used in DSC, the sensor 32 of Fig. 3(a) is provided at diametrically opposite locations of its circumference with two lug portions of white colour that are designed for use as colour-calibration areas 20 in a white balance operation of the camera 12 while at the same time being designed for engagement in cooperating recesses in a sensor support frame designed to exchangeably accommodate the sensor 32. The region of the sensor 32 of Fig. 3(a) which does not belong to any one of the lug portions belongs either to a first support area 18 or to a second support area 19. The first support area 18 is the area which comprises the first target position 26 and the second support area 19 is the area which comprises the second target position 27. The first support area 18 is for illustration purposes highlighted by a dashed white line in Figure 3a.

Figure 3(b) shows the blue channel of a colour image captured by the camera 12 which shows part of a tray 4 with multiple storage locations 28. Crucibles, being example of sample objects 16, occupy some of the storage locations 28 while others are empty. In the illustrated example, the tray 4 is blue while the crucibles are grey. Therefore, in the blue channel of the camera 12, the tray 4 appears in a light colour while the crucibles appear in a darker colour representing their smaller reflectivity of blue light. The tray shown in Figure 3(b) is further equipped by a tray marker 30 in the form of a star, printed for example in white colour on the blue tray 4. Figure 3(b) shows further a crucible which is marked with a crucible marker 31, which is a in this example a pattern of two blue dots arranged on the upper rim of the crucible.

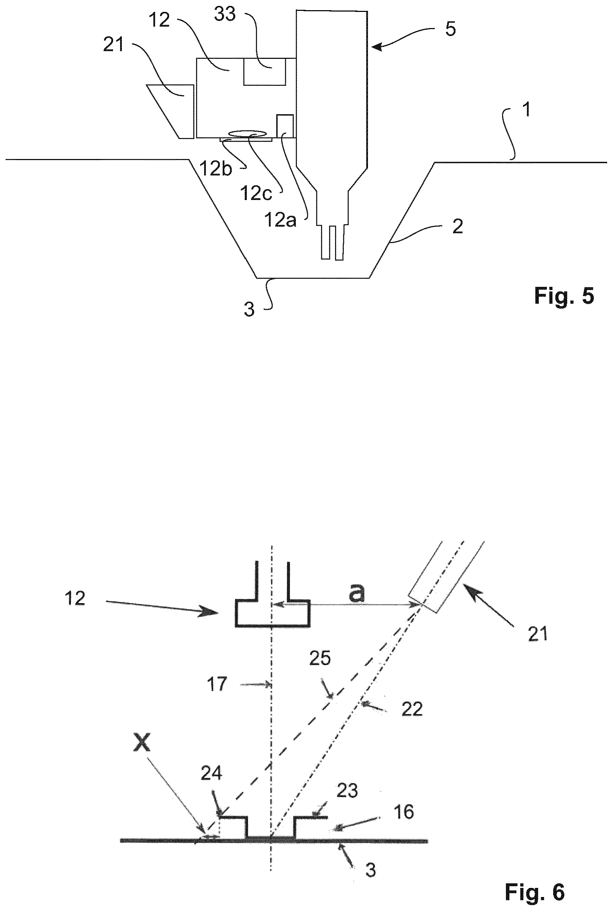

Sample changer 5 may further be provided with a line or crosshair laser 21 that may for example, as illustrated in Fig. 5, be attached to the camera 12. The sample changer 5 shown in Figure 5 comprises further image processing means 33 which are in this example located inside a common housing with the camera 12. The light source 12a of the illustrated sample changer 5 emits polarized light and a polarization filter 12b is arranged in front of the camera 12. Further, the camera is equipped with a focusing objective lens 12c.

Fig. 6 illustrates the lighting conditions of the line or crosshair laser 21 in a plane defined by the laser's optical axis 22 and the line of light projected onto the sample support 3. A crucible, as an example of a sample object 16, on sample support 3 is schematically illustrated to be formed with a horizontally extending upper annular rim 23. The length of the shadow cast by the outer circumference 24 is marked by the symbol x in Fig. 6 and is detectable on an image captured by the camera 12. As is evident from Fig. 6, the vertical height of the annular rim 23 over the sample support 3 may be straight forwardly calculated from the detected length x and the inclination of the peripheral ray 25 that hits the outer circumference 24 of annular rim 23.

With the above-described arrangements, image processing may be used to detect the presence/absence and/or position coordinates of sample object 16 by evaluating the colour and/or colour differences of the sample support 3 and/or the sample object 16, using positioning patterns 18a and 19a like diametrically opposite arcuate sections surrounding target positions 26 and 27, respectively (Fig. 3(a)), and/or identifying sample object 16 according to their dimensions. While lateral dimensions, in particular diameter, may straight forwardly be determined from the imaging scale of the camera 12, heightwise dimensions require additional consideration, such as discussed above with relation to Figures 4(a) and 4(b), or alternatively with relation to Figures 5 and 6.

As a result of the above-described combination of the moveable member 6 and the camera 12, images may be captured of the substance to be analysed and accommodated in the crucible before and after the measurement process for documentation purposes. In addition, by processing images captured by the camera 12, it is possible to detect whether a respective sample support 3 is empty or is occupied by a sample object 16 which allows to control the motion of the moveable member 6 or robot arm so as to safely avoid collisions between a sample object 16 resting on the sample support 3 and another sample object 16 that is being transported by the moveable member 6 towards the sample support 3. Processing of images captured by the camera 12 also allows to precisely determine the position of a sample object 16 in relation to a center of the sample support 3. It further allows to identify the individual crucibles of a set of crucibles which differ from each other, in particular in colour, in size and/or marks, for example crucible markers, provided thereon.

### List of reference signs

- 1: work area
- 2: access channel
- 3: sample support
- 4: tray
- 5: sample changer
- 6: moveable member
- 7: longitudinal axis
- 8: upper portion
- 9: intermediate portion
- 10: lower portion
- 11: grippers
- 12: camera
- 12a: Light source
- 12b: polarization filter
- 12c: focusing objective lens
- 13: drive unit
- 14: workspace
- 15: cover
- 16: sample object
- 17: camera's optical axis
- 18: first support area
- 18a: first positioning pattern
- 19: second support area
- 19a: second positioning pattern
- 20: colour-calibration area
- 21: line or crosshair laser
- 22: laser's optical axis
- 23: annular rim
- 24: outer circumference
- 25: peripheral ray
- 26, 27: first/second target position
- 28: storage locations
- 29: apparent position
- 30: tray marker
- 31: crucible marker
- 32: sensor
- 33: Thermoanalytical instrument
- 34: evaluation means

## Claims

1. Sample changer (5) for a thermoanalytical instrument (33) comprising a moveable member (6) driven for movement between at least a receiving position to pick up a sample object (16) at a releasing sample support (3) and a releasing position to deposit said sample object (16) at a receiving sample support (3), **characterized by** a camera (12) mounted to said moveable member (6) for movement therewith, said camera (12) having a field of view and a depth of focus adapted to capture an at least partial image of at least one of said sample object (16), said releasing or receiving sample support (3).

2. Sample changer (5) according to claim 1, further comprising a light source (12a) mounted to said moveable member (6) for movement therewith to illuminate said field of view of said camera (12).

3. Sample changer (5) according to claim 2, wherein said light source (12a) is a ring light surrounding said camera (12).

4. Sample changer (5) according to anyone of the preceding claims, further comprising image processing means (33) for analysing at least one of the images captured by said camera (12).

5. Sample changer (5) according to claim 4, wherein said image processing means (33) operates to analyse said at least one image for a positional relationship between said sample object (16) and at least one of said releasing or receiving sample support (3).

6. Sample changer (5) according to claim 5, wherein a signal indicative of said positional relationship is used for controlling said movement of said moveable member (6).

7. Sample changer (5) according to anyone of claims 5 or 6, wherein said image processing means (33) operates to analyse said at least one image for at least one visually distinguishable feature of said sample object (16).

8. Sample changer (5) according to anyone of claims 5 to 7, wherein said image processing means (33) operates to analyse said at least one image for at least one dimensional feature of said sample object (16).

9. Sample changer (5) according to anyone of the preceding claims, further comprising a line or crosshair laser (21), preferably mounted for movement with said moveable member (6), having a laser's optical axis (22) oriented so as to cause an observable shadow of said sample object (16) on one of said releasing or receiving sample supports (3).

10. Thermoanalytical instrument (33) comprising a thermoanalytical sensor (32) for receiving a sample object (16) in thermal contact therewith, a tray (4) having at least one storage location (28) for holding the sample object (16), and a sample changer (5) according to anyone of the preceding claims, wherein said releasing sample support (3) is anyone of said storage locations (28) of said tray (4) and said receiving sample support (3) is said thermoanalytical sensor (32).

11. Thermoanalytical instrument (33) according to claims 10, wherein said thermoanalytical sensor (32) comprises a colour-calibration area (20), preferably arranged at an outer peripheral portion of said sensor (32), for performing a white balance operation for an image captured by said camera (12) being a colour camera.

12. Thermoanalytical instrument (33) according to anyone of claims 10 to 11, further comprising a cover (15) configured to shield said sample changer (5) from the ambient atmosphere all the way along its path of movement.

13. Tray (4) for use with a sample changer (5) according to anyone of claims 1 to 9 or for use with a thermoanalytical instrument (33) according to anyone of claims 10 to 12, wherein said tray (4) and said sample object (16) have either colours predominantly in spectral ranges of different channels of said camera (12) or colours which are distributed in such a way over the spectral ranges of at least two channels of said camera (12) that they can be clearly distinguished by the ratio of two of these channels, preferably the tray (4) is blue while the sample object (16) is preferably golden, metallic grey and/or white.

14. Tray (4) according to claim 13, comprising at least one tray marker (30), preferably comprising a barcode and/or an abstract, numeric or alpha-numeric symbol, for imaging by said camera (12) so as to enable an identification of at least one section of said tray (4) associated with said tray marker (30) on an image captured by said camera (12).

15. Crucible for use with a sample changer (5) according to anyone of claims 1 to 9 or for use with a thermoanalytical instrument according to anyone of claims 10 to 12, comprising at least one crucible marker (31) , preferably comprising an abstract, numeric or alpha-numeric symbol, a pattern or an ornament, for imaging by said camera (12) so as to enable an identification of said crucible on an image captured by said camera (12).
